Europäisches Patentamt

European Patent Office

Office européen des brevets

(11) Publication number: **0 106 650**
**B1**

# EUROPEAN PATENT SPECIFICATION

(45) Date of publication of patent specification: **27.12.89**

(21) Application number: **83306139.3**

(22) Date of filing: **11.10.83**

(51) Int. Cl.⁴: **C 08 F 226/10, B 29 D 11/02**
**// (C08F226/10, 220:12)**

(54) Improved hydrogel contact lenses.

(30) Priority: **11.10.82 GB 8228965**

(43) Date of publication of application:
**25.04.84 Bulletin 84/17**

(45) Publication of the grant of the patent:
**27.12.89 Bulletin 89/52**

(84) Designated Contracting States:
**AT BE CH DE FR IT LI NL SE**

(56) References cited:
**GB-A-1 588 746**
**US-A-3 937 680**

(73) Proprietor: **CooperVision Optics Limited**
**Permalens House 1 Botley Road**
**Hedge End Southampton, SO3 3HB (GB)**

(72) Inventor: **Atkinson, Ivor B.**
**90 Queens Drive**
**Surbiton Surrey (GB)**
Inventor: **Holdstock, Barry C.**
**Flat 12 Kingston Court 82 Maple Road**
**Surbiton Surrey (GB)**
Inventor: **Knowlton, John L.**
**121 Ringwood Road**
**Totton Hampshire (GB)**

(74) Representative: **Woodcraft, David Charles et al**
**BROOKES & MARTIN High Holborn House**
**52/54 High Holborn**
**London, WC1V 6SE (GB)**

The file contains technical information
submitted after the application was filed and
not included in this specification

Courier Press, Leamington Spa, England.

## Description

This invention relates to soft contact lenses of a kind which are formed from a hydrated lightly cross-linked copolymer.

A large body of prior art exists which relates to the production of copolymer structures suitable for manufacture of contact lenses. For many years the contact lens industry has been striving to produce a contact lens polymer which when hydrated will possess good mechanical strength so that it can be handled normally without risk of damage, good oxygen transmission characteristics and the ability to be accurately machined or moulded into lens forms of desired variety.

In practice, improvement in one property has tended to result in deterioration of one of the other properties listed above so that a compromise in these desired properties has had to be accepted.

It has now been discovered that when a specially selected monomer mixture is polymerised under defined conditions, a copolymer can be produced which possesses the above properties in a highly desirable combination.

According to the present invention, there is provided a soft hydrogel contact lens which is formed form a hydrated, cross-linked copolymer of a monomer mixture comprising N-vinyl pyrrolidone (NVP) and a short chain alkyl acrylate and/or methacrylate having up to 6 carbon atoms in the alkyl chain, in the weight ratio of from about 1.75:1 to 2.25:1, an unsaturated carboxylic acid and a cross-linking monomer, the monomer mixture containing a majority of NVP and alkyl acrylate and/or methacrylate and having been polymerised using a chemical, free radical initiator and wherein the short chain alkyl acrylate and/or methacrylate component optionally contains up to 5% by weight of a higher alkyl acrylate and/or methacrylate.

The cross-linking agent is normally employed in an amount of 5% or less by weight of the monomer mixture, preferably up to 1% by weight.

In general, the unsaturated carboxylic acid is methacrylic acid (MA) or acrylic acid although other short chain acids containing up to five carbon atoms may be employed. Although the proportion of unsaturated acid which is present in the monomer composition is not critical so far as the upper limit is concerned, we normally prefer to use not more than 10% by weight of the unsaturated acid. The water content of the lens increases with increasing amount of acid and best results are obtained when methacrylic or acrylic acid is used in an amount of from about 0.9 to 5% by weight of acid. Preferably, the lens should have a water content of 70 to 80% or more. The main benefits of the present invention are obtained when the resulting copolymer is hydrated or treated prior to use in an alkaline aqueous solution. Preferably, the solution employed is a saline solution having a pH of about 7.4 to 9. Treatment of the copolymers with an aqueous alkaline solution as described in U.K. Patent No. 1,548,158 results in the formation of alkali metal or alkaline earth metal carboxylate groups by reaction with the free carboxylic groups in the copolymer. Preferably, the pH of the saline solution is raised by adding a sodium or potassium carbonate or bicarbonate but other salts which form alkaline solutions may be used as described in the above mentioned British Patent. This treatment results in a marked increase in the water content of the hydrated copolymers and also in their oxygen permeability.

Short chain alkyl acrylates or methacrylates having up to about 5 to 6 carbon atoms in the alkyl chain may be employed either as single monomers or mixtures of monomers. Preferably, however, either the whole or a substantial proportion of the alkyl acrylate or methacrylate consists of methyl acrylate or methyl methacrylate (MMA), or mixtures with alkyl acrylates and methacrylates in which the alkyl group contains 2 to 4 carbon atoms. For example, methyl acrylate or methacrylate admixed with up to about 30% of butyl acrylate or methacrylate may be advantageously used. Enhanced flexibility is obtained by incorporating a minor proportion, e.g. up to about 5%, of a higher alkyl methacrylate or acrylate, e.g. 2-ethylhexyl methacrylate, in the alkyl acrylate or methacrylate component of the monomer mixture.

A chemical polymerisation initiator is added to the monomer mixture to initiate polymerisation. Irradiation treatment, e.g. with a gamma ray source, either during or after polymerisation should be avoided since it has been found that such treatment adversely affects the mechanical properties of the final polymer. As initiator AIBN (Azobisisobutyronitrile) is preferred though other chemical free radical initiators may be employed. The proportion of chemical initiator used in the monomer compositions varies according to whether the copolymer is to be used for cast-moulded lenses or for producing larger buttons or work-pieces intended to be machined to finished size. In general, a larger proportion of initiator is necessary when moulding lenses directly from the monomer mixture. We prefer to employ a chemical initiator in an amount of from about .04 gms of initiator per 100 gms of monomer to about 1 gm of initiator per 100 gms of monomer. The reason for the difference in the amount of initiator employed is not completely understood but one reason maybe that the moulds employed for direct moulding or casting of lenses are commonly made from polypropylene which contains materials which inhibit polymerisation. In producing buttons or cylindrical work-pieces for machining lenses PTFE moulds are commonly employed.

The copolymers of the present invention are particularly suitable for casting directly to lenses which then need only edge finishing and hydration to form the finished lens. In casting such lenses, we prefer to maintain the composition while in the polypropylene moulds in a nitrogen purged oven for about 20 to 24 hours at about 40°C thereafter, raising the temperature for about 1 hour to 80°C and finally heating the lenses at 120°C in a vacuum oven for about 4 hours. In the case of moulded buttons or work-pieces a preferred polymerisation procedure is to introduce the monomer mixture containing the free radical initiator into suitably sized PTFE moulds and submerging these in a water bath held at about 55°C for about 20 hours, followed by raising the temperature to 80°C for about 2 hours. Finally, a cure of about 1 hour at 120°C in a vacuum oven follows this treatment. The following Examples will illustrate the present invention:

## Example 1

A homogeneous casting mixture was prepared by thoroughly mixing together re-distilled methacrylic acid (3.22 gms), purified methyl methacrylate (32.18 gms) and N-vinyl pyrrolidone (64.37 gms) together with allyl methacrylate (AMA) (.23 gms). As chemical initiator AIBN was employed at the rate of .05 gms per 100 gms of monomer. The resulting mixture was degassed by application of a vacuum and was then added to PTFE moulds, sealed and immersed in a water bath for 20 hours at 55°C followed by raising the temperature to 80°C for 2 hours. The resulting buttons were removed from the mould and then heated for 1 hour at 120°C in a vacuum oven. Lenses were cut by lathing from the resultant buttons and the resulting lenses were hydrated by soaking in a sodium bicarbonate-saline solution at a pH of 7.4.

The above procedure was then repeated except that the lenses were directly cast and cured by heating initially for 22 hours at 40°C in a nitrogen purged oven followed by 1 hour at 80°C in the same oven for 4 hours at 120°C. The properties including the water content refractive index and swell factors of the resulting lenses are shown in the following Table 1. In this Table "Dia" means Lens Diameter and "BC" means Base Curve.

PROPERTIES OF CONTACT LENSES OF NEW POLYMERIC MATERIALS MADE FROM NVP, MMA AND MA
CROSSLINKED WITH 0.23% w/AMA ON MONOMERS (wt. Ratio NVP:MMA = 2:1)

TABLE 1

| Polymer Code | MA content of Monomer mixture (% w/w) | Swell Factor (21°C) | | | Refractive index hydrated (21°C) | | Refractive index dry, | | Water content (% w/w) @ 25°C) | |
|---|---|---|---|---|---|---|---|---|---|---|
| | | Lathed lens | Moulded lens | | Lathed Lens | Moulded Lens | Lathed Lens | Moulded Lens | Lathed Lens | Moulded Lens |
| | | | Dia. | BC | | | | | | |
| Example 2 | 0.92 | | 1.52 | 1.52 | | | | | | 69.8 |
| Example 3 | 1.04 | | 1.53 | 1.52 | | | | | | 70.2 |
| Example 4 | 1.31 | | 1.55 | 1.51 | | | | | 70.0 | 71.2 |
| Example 5 | 2.27 | 1.56 | 1.62 | 1.60 | 1.381 | 1.379 | 1.520 | | 70.9 | 74.6 |
| Example 6 | 2.91 | 1.59 | 1.67 | 1.63 | 1.378 | 1.374 | 1.517 | | 72.5 | 76.4 |
| Example 1 | 3.22 | 1.61 | 1.68 | 1.65 | 1.376 | 1.374 | 1.519 | | 73.4 | 76.7 |

EP 0 106 650 B1

The above procedure was repeated using the same relative proportions of NVP to MMA but varying the amount of methacrylic acid in the monomer mixture. The precise proportions are shown in the attached Table 2. Again, lenses were made by direct moulding and by lathing and the properties of these lenses are shown in Table 1.

Water content is related to the oxygen permeability of the hydrogel polymers and in general the higher the water content, the greater the oxygen permeability. This is, however, not the only factor and two polymer hydrogels having the same water content may have different oxygen permeabilities. Table 3 shows in graphical form the relationship between the amount of methacrylic acid in the monomer mixture against the water content and the linear swell factor of the resulting hydrogels. As can be seen from this graph water contents in the range of 70 to 76% are obtained using methacrylic acid in amounts of about 1 to 3.5% of acid.

## MONOMER COMPOSITIONS (PARTS BY WEIGHT)

### TABLE 2

|  | Example 2 | Example 3 | Example 4 | Example 5 | Example 6 | Example 1 |
|---|---|---|---|---|---|---|
| NVP | 65.90 | 65.82 | 65.63 | 65.00 | 64.57 | 64.37 |
| MMA | 32.95 | 32.91 | 32.82 | 32.50 | 32.29 | 32.18 |
| MA | 0.92 | 1.04 | 1.31 | 2.27 | 2.91 | 3.22 |
| AMA | 0.23 | 0.23 | 0.24 | 0.23 | 0.23 | 0.23 |
|  | 100.00 | 100.00 | 100.00 | 100.00 | 100.00 | 100.00 |

TABLE 3

WATER CONTENT
IN NaCl-NaHCO$_3$
(ph 7.4) at
21$^{\circ}$C (% w/w)

MA in Monomers (% w/w)

LINEAR
SWELL
FACTOR
(21$^{\circ}$C)

MOULDED
LENS

MOULDED LENS

LATHED
LENS

LATHED
LENS

EP 0 106 650 B1

The oxygen transmission characteristic of the polymers produced in Example 1 have been directly tested in the form of a contact lens having a centre thickness from about .06 to .3 mm. Such thicknesses cover a wide range of conventional thicknesses for contact lenses. The results of these tests, which were carried out using the procedure described by Hill and Fatt, indicate that the polymers of the present invention when formed into contact lenses exhibit a oxygen transmission rate which is exceptionally high and which when tested on a 0.06 mm central thickness contact lens, was not significantly different from the situation where no lens was used. Such a result indicates that lenses made in accordance with the present invention could be safely worn for an extended period e.g. several months without removal. A graphical indication of the results of the oxygen transmission rate of the lens is shown in the attached Table 4 which is a graphical plot showing the percentage oxygen equivalent against centre thickness of the lens. It will be appreciated that 21% represents a condition where no lens is worn at all.

## TABLE 4

Despite the very high oxygen permeability characteristics of the polymers in accordance with this invention they do show improved tensile strength as compared with conventional lenses. Thus, for example, the polymer produced in accordance with Example 4 of the present invention is compared in Table 5 below with a copolymer of methyl methacrylate and NVP cross-linked with the same amount of allyl methacrylate but containing no methacrylic acid.

### TABLE 5
### MECHANICAL PROPERTIES (CAST SHEETS)

| Sample | Water Content (% w/w) | Tensile Strength (kg cm$^{-2}$) | Tear Strength (kg cm$^{-1}$) (Initiation/ Propagation) |
|---|---|---|---|
| 1. Example 4 | 70 | 8.5 | 0.43/0.26 |
| 2. Copolymer of MMA and NVP (MMA/NVP = 1:2.865 wt ratio) cross-linked with 0.23% AMA on monomers | 71 | 4.0 | 0.19/0.13 |
| 3. Polyhema cross-linked with 0.5% EGDM | 38 | 9.4 | 0.36/0.22 |

Material Samples 2 and 3 are polymers not in accordance with the invention and are for comparison.

The improved mechanical properties of Sample 1 (in accordance with the invention) over Sample 2 (no acid and larger proportion of NVP) are believed to be a consequence of the presence in Sample 1 of a higher concentration of reinforcing hydrophobic (MMA) domains.

This comparative copolymer when hydrated under the same conditions contained 71% of water. As will be seen, the tensile strength of the Example 4 copolymer was over twice that of the comparative hydrated copolymer and there is a similar improvement in the tear strength of the material.

## Claims

1. A soft hydrogel contact lens which is formed from a hydrated, cross-linked copolymer of a monomer mixture comprising N-vinyl pyrrolidone (NVP) and a short chain alkyl acrylate and/or methacrylate having up to 6 carbon atoms in the alkyl chain, in the weight ratio of from about 1.75:1 to 2.25:1, an unsaturated carboxylic acid and a cross-linking monomer, the monomer mixture containing a majority of NVP and alkyl acrylate and/or methacrylate and having been polymerised using a chemical, free radical initiator and wherein the short chain alkyl acrylate and/or methacrylate component optionally contains up to 5% by weight of a higher alkyl acrylate and/or methacrylate.

2. A lens according to claim 1 wherein the unsaturated carboxylic acid comprises from about 0.9 to 5% by weight of the monomer mixture.

3. A lens according to claim 1 or 2 wherein the acid is methacrylic or acrylic acid.

4. A lens according to any one of the preceding claims wherein the chemical initiator is employed in an amount of from about 0.04 to 1 gram per 100 grams of monomer.

5. A lens according to any one of the preceding claims wherein the cross-linking agent is present in the monomer mixture in an amount of up to 1% by weight.

6. A lens according to claim 5 wherein the cross-linking agent is allyl methacrylate.

7. A lens according to any one of the preceding claims wherein the copolymer contains alkali metal or alkaline earth metal carboxylate groups resulting from treating the copolymer with an aqueous solution having a pH greater than 7 and containing alkali metal or alkaline earth metal cations.

8. A lens according to any one of the preceding claims which has a water content of from 70 to 80%.

9. A method of producing a soft hydrogel contact lens which comprises preparing a polymerisation mixture comprising NVP and an alkyl acrylate and/or methacrylate, wherein the alkyl group contains from 1 to 4 carbon atoms, wherein the alkyl acrylate and/or methacrylate optionally contains up to 5% by weight of a higher alkyl acrylate and/or methacrylate, in the weight ratio of from about 1.75:1 to 2.25:1, 0.9 to 10% by weight of an unsaturated carboxylic acid and up to 5% by weight of a cross-linking monomer, inducing polymerisation of said mixture solely by means of a chemical, free radical initiator, forming a lens and then treating the resulting lens with an aqueous solution having a pH greater than 7 to convert free carboxylic acid groups to carboxylate groups.

10. A method according to claim 9 wherein the lens is formed by casting the polymerisation mixture in a mould.

## Patentansprüche

1. Weiche Hydrogel-Kontaktlinse, die aus einem hydrathaltigen, vernetzten Copolymer eines Monomergemisches aus N-Vinyl-pyrrolidon (NVP) und einem kurzkettigen Alkylacrylat und/oder -methacrylat mit bis zu 6 Kohlenstoffatomen in der Alkylkette, in einem Gewichtsverhältnis von ungefähr 1,75:1 bis 2,25:1, einer ungesättigten Karbonsäure und einem vernetzten Monomer gebildet ist, wobei das Monomergemisch eine Mehrheit an NVP und Alkylacrylat und/oder -methacrylat aufweist und unter Verwendung eines chemischen, freien Radikalinitiators polymerisiert worden ist und worin die kurzkettige Alkylacrylat- und/oder -methacrylatkomponente wahlweise bis zu 5 Gew.-% eines höheren Alkylacrylats und/oder -methacrylats enthält.

2. Linse nach Anspruch 1, worin die ungesättigte Karbonsäure ungefähr 0,9 bis 5 Gew.-% des Monomergemisches enthält.

3. Linse nach Anspruch 1 oder 2, worin die Säure Methacryl- oder Acrylsäure ist.

4. Linse nach einem der vorhergehenden Ansprüche, worin der chemische Initiator in einer Menge von ungefähr 0,04 bis 1 Gramm pro 100 Gramm Monomer verwendet wird.

5. Linse nach einem der vorhergehenden Ansprüche, worin das vernetzte Mittel im Monomergemisch in einer Menge bis zu 1 Gew.-% vorliegt.

6. Linse nach Anspruch 5, worin das vernetzte Mittel Allylmethacrylat ist.

7. Linse nach einem der vorhergehenden Ansprüche, worin das Copolymer Alkalimetall- oder alkalische Erdmetallcarboxylatgruppen, die durch die Behandlung des Copolymers mit einer wässerigen Lösung mit einem größeren pH-Wert als 7 und mit Alkalimetall- oder alkalische Erdmetallkationen entstehen, enthält.

8. Linse nach einem der vorhergehenden Ansprüche, die einen Wassergehalt von 70 bis 80% aufweist.

9. Verfahren zur Herstellung einer weichen Hydrogel-Kontaktlinse, das die Herstellung eines Polymerisationsgemisches aus NVP und einem Alkylacrylat und/oder -methacrylate, worin die Alkylgruppe 1 bis 4 Kohlenstoffatome enthält, worin das Alkylacrylat und/oder -methacrylat wahlweise bis zu 5 Gew.-% eines höheren Alkylacrylats und/oder -methacrylats, im Gewichtsverhältnis von ungefähr 1,75:1 bis 2,25:1, 0,9 bis 10 Gew.-% einer ungesättigten Karbonsäure und bis zu 5 Gew.% eines vernetzten Monomers enthält, die Polymerisation des Gemisches nur mittels eines chemischen, freien Radikalinitiators, die Herstellung einer Linse und anschließend die Behandlung der entstandenen Linse mit einer wässerigen Lösung mit einem größeren pH-Wert als 7 zur Umwandlung der freien Karbonsäuregruppen in Carboxylatgruppen umfaßt.

10. Verfahren nach Anspruch 9, worin die Linse hergestellt wird, indem das Polymerisationsgemisch in eine Form gegossen wird.

**Revendications**

1. Une lentille de contact en hydrogel souple qui est formée à partir d'un copolymère réticulé hydraté d'un mélange de monomères comprenant de la N-vinylpyrrolidone (NVP) et un acrylate et/ou méthacrylate d'alkyle à chaîne courte dont la chaîne alkylique compte au maximum 6 atomes de carbone, en un rapport en poids d'environ 1,75:1 à 2,25:1, un acide carboxylique insaturé et un monomère réticulant, le mélange de monomères contenant une majeure partie de NVP et d'acrylate et/ou méthacrylate d'alkyle et ayant été polymérisé au moyen d'un initiateur radicalaire chimique, et le composant acrylate et/ou méthacrylate d'alkyle à chaîne courte contenant facultativement jusqu'à 5% en poids d'un acrylate et/ou méthacrylate d'alkyle supérieur.

2. Une lentille selon la revendication 1, dans laquelle l'acide carboxylique insaturé constitue environ 0,9 à 5% en poids du mélange de monomères.

3. Une lentille selon la revendication 1 ou 2, dans laquelle l'acide est l'acide méthacrylique ou acrylique.

4. Une lentille selon l'une quelconque des revendications précédentes, dans laquelle l'initiateur chimique est utilisé en une quantité d'environ 0,04 à 1 gramme pour 100 grammes de monomère.

5. Une lentille selon l'une quelconque des revendications précédentes, dans laquelle l'agent réticulant est présent dans le mélange de monomères en une quantité d'au maximum 1% en poids.

6. Une lentille selon la revendication 5, dans laquelle l'agent réticulant est le méthacrylate d'allyle.

7. Une lentille selon l'une quelconque des revendications précédentes, dans laquelle le copolymère contient des groupes carboxylates de métal alcalin ou métal alcalino-terreux qui résultent du traitement du copolymère par une solution aqueuse ayant un pH supérieur à 7 et contenant des cations de métal alcalin ou métal alcalino-terreux.

8. Une lentille selon l'une quelconque des revendications précédentes, dont la teneur en eau est de 70 à 80%.

9. Un procédé de production d'une lentille de contact en hydrogel souple, qui consiste à préparer un mélange de polymérisation comprenant de la NVP et un acrylate et/ou méthacrylate d'alkyle dont le groupe alkyle compte 1 à 4 atomes de carbone, dans lequel l'acrylate et/ou méthacrylate d'alkyle contient facultativement jusqu'à 5% en poids d'un acrylate et/ou méthacrylate d'alkyle supérieur, en un rapport en poids d'environ 1,75:1 à 2,25:1, 0,9 à 10% en poids d'un acide carboxylique insaturé et jusqu'à 5% en poids d'un monomère réticulant, à provoquer la polymérisation dudit mélange uniquement au moyen d'un initiateur radicalaire chimique, à former une lentille, puis à traiter la lentille résultante par une solution aqueuse ayant un pH supérieur à 7 pour convertir les groupes acide carboxylique libres en groupes carboxylates.

10. Un procédé selon la revendication 9, dans lequel on forme la lentille en coulant le mélange de polymérisation dans un moule.